# EUROPEAN PATENT APPLICATION

(11) **EP 3 644 045 A1**
(43) Date of publication of application: **29.04.2020**
(21) Application number: 18202903.3
(22) Date of filing: 26.10.2018
(51) Int. Cl.: G01N 21/64, G01J 3/28

(54) **HYPERSPECTRAL IMAGING FOR SPECTRAL AND SPATIAL CHARACTERIZATION OF QUANTUM DOTS**

(71) Applicant: Julius-Maximilians-Universität Würzburg, 97070 Würzburg (DE)
(72) Inventor: Dusanowski, Lukasz, 97076 Würzburg (DE); Höfling, Sven, 97753 Karlstadt (DE); Schneider, Christian, 97228 Rottendorf (DE)
(74) Representative: Lucke, Andreas

(57) **Abstract**

A method for characterizing an ensemble of single photon emitters on a substrate with respect to their location and a characteristic single photon emission wavelength comprises exciting said single photon emitters to emit a luminescence signal comprising a plurality of single photon emissions of said single photon emitters, imaging said luminescence signal of the ensemble of single photon emitters with a collection lens assembly for forming a sample image, said sample image comprising said luminescence signal of the ensemble of single photon emitters, projecting the sample image to overlay a slit, the slit being oriented along a slit direction to select a one-dimensional slice of the sample image, said one-dimensional slice forming a slit image, projecting said slit image onto a wavelength dependent light beam splitter to generate a hyperspectral slit image of said slit image, and collecting said hyperspectral slit image on a two-dimensional sensor array for obtaining wavelength information of the slit image along a first direction of the sensor array and for obtaining location information of single photon emitters selected in the slit image along a second direction of the sensor array.

## Description

### FIELD OF THE INVENTION

The present invention is in the field of fabrication of quantum devices. More precisely, the present invention relates to the characterization of single photon emitters for the fabrication of single photon emitter devices.

### BACKGROUND

The prospect of using selectively prepared quantum states of matter for metrology, cryptography or implementation of computing devices has led to intensive research and development in suitable nanometric and mesoscopic systems.

The use of quantum mechanical states as information carriers could provide several advantages. For example, classically hard computational problems, which are difficult to solve on a classical computer, have been shown to have better scaling solutions when simulated in a sufficiently controllable quantum system. Additionally, the inherent properties of quantum physics could allow implementing new cryptography schemes to secure important messaging pathways, such as bank transfers.

One promising candidate of such a controllable quantum system is a single photon of electromagnetic radiation (e.g. light), in which information is encoded. However, generating such a single isolated photon in a controlled manner can be challenging. One way to generate such single photons is by way of a radiative transition in a specifically selected two-level system, i.e. a system having two defined quantum mechanical states, wherein a transition between said two defined quantum mechanical states is associated with the emission of a photon, whose energy is associated with the energy difference between the two defined quantum mechanical states. These two-level systems, in the following called single photon emitters, may be artificially created in crystals by way of implantation, or compositional and/or structural variation of the crystal, for example by providing a quantum dot structure in a crystal.

Then, to efficiently extract the photon from the two-level system, the emitter can be arranged in a cavity. However, this cavity needs to be adapted and tuned to both position and wavelength of the single photon emitter for optimal performance.

Sapienza et al. ("Nanoscale optical positioning of single quantum dots for bright and pure single-photon emission", Nature Com., 2015) show the growth of self-assembled InAs/GaAs quantum dots in a crystal. A sample with the grown quantum dots is loaded into a cryostat, cooled down to low temperatures and illuminated with an LED of short wavelength. The photoluminescence of the quantum dots is captured with microscope optics coupled to a CCD camera to determine the positions of the quantum dots. The sample is then illuminated with focused laser spot radiation and a sample stage in the cryostat is displaced using piezocrystal actuators to move the spot across the surface of the sample. The spectral response of the sample to the focused laser excitation is collected by microscope optics and analyzed with a spectrometer. A cavity is then fabricated at the determined location of the InAs/GaAs quantum dot, wherein the cavity characteristics are matched to the wavelength determined by the measurement with the focused laser spot.

### SUMMARY OF THE INVENTION

The known methods and corresponding devices however suffer from limited possibilities for parallelization and optimization of the quantum dot characterization. Particularly, the research applications employing mechanical movement of a sample stage carrying the substrate can lead to systematic errors in the single-photon emitter characterization due to mechanical vibrations and displacement errors of the sample stage. Moreover, the scanning of the surface with a focused laser spot can severely limit the speed and parallelization options of the fabrication process. At the same time, focused laser spots and piezoelectric displacement devices can allow characterizing the single photon emitters with nanometer precision.

In view of this state-of-the-art, the object of the invention is to provide a fast and simple characterization method and corresponding system which allows characterizing single-photon emitter systems with high precision and inherent fault-tolerance and which is scalable for the industrial applicability of single photon technology.

This object is solved by a method and characterization system for characterizing an ensemble of single-photon emitters on a substrate according to the independent claims. The dependent claims relate to preferred embodiments.

According to a first aspect, the invention relates to a method for characterizing an ensemble of single photon emitters on a substrate with respect to their location and a characteristic single photon emission wavelength. The method comprises exciting said single photon emitters to emit a luminescence signal comprising a plurality of single photon emissions of said single photon emitters, and imaging said luminescence signal of the ensemble of single photon emitters with a collection lens assembly for forming a sample image, said sample image comprising said luminescence signal of the ensemble of single photon emitters. The method further comprises projecting the sample image to overlay a slit, the slit being oriented along a slit direction to select a one-dimensional slice of the sample image, said one-dimensional slice forming a slit image, projecting said slit image onto a wavelength dependent light beam splitter to generate a hyperspectral slit image of said slit image, and collecting said hyperspectral slit image on a two-dimensional sensor array for obtaining wavelength information of the slit image along a first direction of the sensor array and for obtaining location information of single photon emitters selected in the slit image along a second direction of the sensor array.

Thus, a subset of single photon emitters located in said selected one-dimensional slice of a substrate region can be simultaneously imaged. By generating the hyperspectral slit image from the selected one-dimensional slice, the simultaneous capture of the emission profile of each single photon emitter present in the selected one-dimensional slice can be performed. Hence, capturing the hyperspectral image with the sensor array allows obtaining a fast and consistent characterization of the single photon emitters within a selected one-dimensional slice.

Single-photon emitters can be implemented by two-level systems, wherein a transition between said two levels is associated with an emission of a photon having the characteristic single photon emission wavelength. Examples of such systems are semiconductor quantum dots, such as colloidal nanocrystals, self-assembled quantum dots obtained via Stranski-Krastanov growth, or defect states originating from local crystal defects, such as vacancies or dopants in specific crystal sites, for example nitrogen vacancy centers in diamond crystals. Alternatively, specifically designed molecules may also be employed for implementing a two-level system.

The single-photon emitters can be provided on the surface of the substrate or can be embedded in a region of the substrate from which radiation can be extracted. For most of the above mentioned examples of single photon emitters, one or both of the emission wavelength and the location on the substrate is nondeterministic. For example, self-assembled quantum dots usually form at nondeterministic locations on a crystal surface, while their emission wavelength depends on their size and composition, which is likewise subject to a degree of randomization. However, when their location and emission wavelength is well known, suitable single photon emitters can be identified and corresponding selection cavities can be fabricated with nanofabrication techniques, making them promising candidates for scalable single-photon device architectures.

The excitation of the single photon emitters can be performed with various techniques and generally only requires inducing a population inversion in the two-level system by some form of energy transfer. For example, the substrate may be excited with electrons, photon irradiation, electric fields, or the like, and excitation of the substrate may then result in an excitation of the two-level system of the single photon emitters on the substrate which can be followed by the emission of single photons as said luminescence signal. Naturally, the single-photon emitters can also be directly excited and the excitation and the single photon emission may occur sequentially or simultaneously.

In a preferred embodiment, the luminescence signal is a photoluminescence, cathodoluminescence or electroluminescence signal, wherein exciting said single photon emitters comprises exciting the substrate with photon radiation and/or electron radiation and/or injected carriers enabling excitation of multiple single photon emitters in the substrate wherein said excitation at each instance covers at least the ensemble of single photon emitters currently projected onto the slit image.

In some embodiments, said excitation is provided by one or more of a wavelength-filtered radiation source, a substantially monochromatic radiation source, a solid state emitter, an LED, a laser, an electron emitter, and a carrier injection unit for injecting electrical carriers into the substrate, wherein the excitation preferably comprises large area irradiation with photons.

In a preferred embodiment, the luminescence signal is a photoluminescence signal, and exciting said single photon emitters comprises irradiating the substrate with excitation radiation having an excitation wavelength, the excitation wavelength being smaller than the characteristic wavelength of the single photon emitters or smaller than a wavelength corresponding to a bandgap of the substrate, wherein said excitation radiation at each instance covers at least the ensemble of single photon emitters currently projected onto the slit image.

A photoluminescence signal can be directly and controllably excited by irradiating the sample with photons and does not require any electrical contact to the substrate. Additionally, the excitation radiation can be controllably spread over the investigated region of the substrate.

In a preferred embodiment, the excitation radiation does not comprise radiation having the characteristic wavelength of the single photon emitters, wherein said excitation radiation is preferably provided by one of a wavelength-filtered radiation source, a substantially monochromatic radiation source, a solid state emitter, an LED, and a laser.

By limiting the wavelength of the excitation radiation, spurious signals from backscattered excitation radiation in the hyperspectral image can be avoided.

The luminescence signal can be collected with a collection lens assembly such as a microscope objective. The collection lens assembly creates the sample image on the slit and the slit therefrom selects the slit image of said sample image.

In a preferred embodiment, the method further comprises a step of displacing the sample image along a displacement direction with respect to the slit, wherein the displacement direction is different from the slit direction. For example, the displacement may form an angle with the slit direction which is larger than 45°, such as about 90°.

By displacing the sample image with respect to the slit, a different one-dimensional slice of the sample image can be selected to thereby characterize a two-dimensional region/projection of the substrate formed by a series of one-dimensional slices selected by the slit.

In a preferred embodiment, the step of displacing the sample image along the displacement direction with respect to the slit comprises mechanically displacing an optical element in an imaging light path between the sensor array and the collection lens assembly over a first distance, such that the sample image overlying the slit is translated with respect to the slit over a second distance, said second distance corresponding to a virtual displacement distance of the imaged luminescence signal on the substrate that is smaller than the first distance, wherein a ratio between the first distance and the virtual displacement distance is in particular larger than 10, preferably larger than 20, most preferably larger than 30 and preferably smaller than 60, more preferably smaller than 50.

Thus, instead of using a displacement of the sample stage with nanometer precision based on piezoelectric elements, an optical element outside of the sample stage can also be moved to move the sample image with respect to the slit to induce a virtual displacement of the substrate by a smaller distance. This can have the advantage of reducing the complexity of the sample stage while the magnification provided by the collection lens assembly can be advantageously used for translating a large displacement of the optical elements to a smaller effective displacement of the sample image. Thus, the overall requirements for displacement accuracy can be reduced. In principle, the slit may also be moved to select a different one-dimensional slice of the sample image.

In a preferred embodiment, a selection lens is arranged in an imaging light path between the substrate and the slit, wherein the method comprises a step of displacing the selection lens along the displacement direction.

In a preferred embodiment, the collection lens assembly comprises a collection lens, in particular a microscope objective, which has a focal length which is smaller than a focal length of the selection lens, such that a translation of the selection lens along the displacement direction by a first distance corresponds to a virtual displacement of the imaged luminescence signal by a virtual displacement distance on the substrate that is smaller than the first distance.

Thus, the magnification of the optical assembly for creating the sample image can be advantageously used to reduce accuracy requirements in the mechanical displacement. Such reduced accuracy requirements in the mechanical displacements translates to an improved accuracy regarding the position of the single photon emitters along the displacement direction.

The wavelength dependent beam splitter can then provide separate light paths for light beams having different wavelengths but originating from the same portion of the slit for forming the hyperspectral slit image. The wavelength dependent beam splitter can in principle be implemented by any dispersive material slab, such as a prism. However, the wavelength dependent beam splitter is preferably a diffraction grating onto which the slit image is projected. Preferably, the wavelength dependent beam splitter is arranged to split light having different wavelengths along a splitting direction which is substantially perpendicular to the slit direction, such that the hyperspectral image is substantially rectangular to match the shape of conventional two-dimensional radiation sensors. Naturally, the expressions "light" and "light beam" as used herein are used for illustrative purposes only and should not be construed as limiting the light or the light beam to human visible light wavelengths, but should rather be seen as equivalent to electromagnetic radiation.

The hyperspectral image may then be imaged by the sensor array, such as a CCD camera. Preferably, the sensor array comprises sensors arranged in rows and columns, and the rows and columns are aligned with the slit direction and splitting direction, such that the first and second directions correspond substantially to the direction of the rows and columns of the sensor array, respectively.

In some embodiments, the collection lens assembly comprises a beam expander. The beam expander may increase a resolution for the imaged sample portion, thereby improving the characterization of the location of the single photon emitters within the slit image.

In a preferred embodiment, the single photon emitter characterization is carried out in a predetermined emitter portion of the substrate, said emitter portion being spatially delimited by an elongated alignment feature extending along an alignment direction, said alignment direction being different from the slit direction in the sample image, and wherein the method further comprises a step of detecting the elongated alignment feature in the slit image. The elongated alignment feature may be detected as a narrow portion in each slit image of the two-dimensional substrate region/projection. Preferably, the elongated alignment feature provides at least two spaced apart elongated portions, and the method comprises detecting both elongated portions within the slit image, and calibrating the spatial origin of the luminescence signal of the single photon emitters on the substrate based on the detected positions of the at least two elongated portions.

The predetermined emitter portion of the substrate can be defined with the alignment feature before a characterization step. The alignment feature can be an alignment mark, such as a metallized portion of the substrate having a certain shape, or may be provided by a substrate portion having different optical properties than the surrounding subject area, such as a structured surface portion or groove, an implantation region comprising electrically or optically active dopants, or surface portions having different refractive or reflective properties, for example surface portions comprising oxides or additional material layers.

After displacing the sample image with respect to the slit, information on the location of the one-dimensional slice of the sample image on the substrate can be updated based on detecting the elongated alignment feature. In particular, systematic errors inducing a drift of the sample image along the slit direction can be corrected based on the position of the elongated alignment feature in the slit image.

Since the wavelength emitted by or scattered from the elongated alignment feature can be different from the characteristic wavelength of the single photon emitters, the alignment feature can be directly identified in the hyperspectral slit image. In some embodiments, an additional sensor array is provided for imaging scattered light originating from the alignment feature in the slit image.

In a preferred embodiment, the method further comprises a step of arranging the elongated alignment feature on the substrate.

Based on the type of elongated alignment feature used, arranging the elongated alignment feature can comprise lithography, etching, implementation, sputtering, a material growth process, or combinations thereof. Such nanofabrication techniques are well-known in the art and will not be described in more detail in the following.

In a preferred embodiment, the alignment feature has a continuous or interrupted extension in the alignment direction, wherein the accumulated extension of the alignment feature or its portions amounts to at least 50%, preferably 70% of the extension of the emitter portion along the alignment direction, most preferably continuously extends along the alignment direction within the emitter portion of the substrate.

Preferably, the extension of the elongated alignment feature has a continuous extension along the alignment direction, such that systematic errors in the displacement of the sample image with respect to the slit can be corrected based on detecting the elongated alignment feature along the full extension of the predetermined emitter portion along the alignment direction.

In a preferred embodiment, the alignment feature comprises a reference portion of a predetermined length in said alignment direction, to define a length scale for the sample image along the alignment direction, the length scale being smaller than the size of the emitter portion.

Additional reference portions as part of the alignment feature can allow correcting for systematic errors in the displacement of the sample image along the displacement direction, such that an accuracy of the determined location of the single photon emitters along the displacement direction can be increased based on a comparison between an intended displacement and a measured displacement inferred from the determined extension of the reference portion along the displacement direction.

Suitable reference portions may be elongated substrate features having a predetermined extension along the displacement direction. For example, the alignment feature may incorporate a scale bar or may comprise periodic features, such as a wavelike or saw tooth-shaped elongated alignment feature. In some examples, the elongated alignment feature provides at least two portions spaced apart along the slit direction, wherein a spatial distance in the emitter portion of the substrate between said two portions varies as a function of displacement distance, and the method comprises detecting the spatial distance between said two portions and correcting, based on the detected displacement distance the spatial origin of the luminescence signal of the single photon emitters on the substrate.

In a preferred embodiment, the invention relates to a method for fabricating a single photon emission device, the method comprising a step of characterizing an ensemble of single photon emitters on a substrate with respect to their location and a characteristic single photon emission wavelength according to any one of the preceding embodiments of the first aspect. The method then further comprises selecting a single photon emitter from the ensemble of single photon emitters on the substrate, and forming an emitter selection structure on the substrate for the selected single photon emitter based on the location information and the wavelength information for the single photon emitter.

The emitter selection structure may be a combination of substrate features allowing efficient extraction and/or generation of the single photon emission. For example, the emitter selection structure may incorporate electrodes for inducing a population inversion in the single photon emitter or may comprise a cavity along at least one spatial direction for inducing a preferential emission direction for the single photon emission. Such a preferential emission direction can be paramount for an efficient extraction of the generated single photon emission.

In a preferred embodiment, said emitter selection structure comprises a cavity matching said wavelength information associated with the selected single photon emitter. Said cavity may be a three-dimensional cavity or a two-dimensional cavity, and may be implemented by a refractive index variation of the substrate close to the single photon emitter, such as a structural or compositional variation of the substrate close to the single photon emitter.

The coupling between the cavity and the single photon emitter can strongly depend on the positioning of the cavity with respect to the single photon emitter, such that the characterization method according to any one of the preceding embodiments of the first aspect can efficiently improve single photon extraction from the single photon emitter.

In a preferred embodiment, the method further comprises providing an ensemble of single photon emitters on the substrate, in particular by performing an implantation process or a crystal growth process for forming the single photon emitters on the substrate.

Providing the ensemble of single photon emitters using an implantation or a crystal growth process can allow fabricating the single photon emission device within an integrated nanofabrication system, thereby limiting the possibilities for impurities entering the device.

In a second aspect, the invention relates to a system for characterizing an ensemble of single photon emitters on a substrate with respect to their location and a characteristic single photon emission wavelength. The system comprises a collection lens assembly, a slit, a wavelength dependent beam splitter, and a sensor array. The collection lens assembly is adapted to collect a luminescence signal of the ensemble of single photon emitters at the transition wavelength and to create a sample image of the luminescence signal of the single photon emitters on the substrate. The slit is arranged in an image plane of the collection lens assembly, the image plane comprising the sample image, the slit being oriented along a slit direction to select a one-dimensional slice of the sample image, said one-dimensional slice forming a slit image. The wavelength dependent light beam splitter is arranged to receive said slit image and to generate a hyperspectral slit image of said slit image. The two-dimensional sensor array is arranged to collect said hyperspectral slit image for obtaining wavelength information of the slit image along a first direction of the sensor array and for obtaining location information of single photon emitters selected in the slit image along a second direction of the sensor array.

Preferably, the system according to the second aspect is configured to implement any one of the embodiments of the method according to the first aspect.

In a preferred embodiment, the system further comprises a selection unit, wherein the selection unit is arranged to displace the sample image overlying the slit along a displacement direction with respect to the slit, wherein the displacement direction is different from the slit direction, in particular forming an angle with the displacement direction which is larger than 45°, or substantially 90°.

In a preferred embodiment, the selection unit is arranged to mechanically displace an optical element in an imaging light path between the sensor array and the collection lens assembly over a first distance, such that the sample image overlying the slit is translated with respect to the slit over a second distance, said second distance corresponding to a virtual displacement distance of the imaged luminescence signal on the substrate that is smaller than the first distance, wherein a ratio between the first distance and the virtual displacement distance is in particular larger than 10, preferably larger than 20, most preferably larger than 30 and preferably smaller than 60, more preferably smaller than 50.

The selection unit may comprise a servomotor or piezoelectric displacement device to controllably displace the optical element in the imaging light path.

In a preferred embodiment, the selection unit comprises a selection lens arranged to be displaceable along the displacement direction, the selection lens being arranged in an imaging light path between the substrate and the slit.

In a preferred embodiment, the collection lens assembly comprises a collection lens, in particular a microscope objective, which has a focal length which is smaller than a focal length of the selection lens, such that a translation of the selection lens along the displacement direction by a first distance induces a displacement of the imaged luminescence signal over a virtual displacement distance on the substrate that is smaller than the first distance.

In a preferred embodiment, the system is configured for characterizing said single photon emitters in a predetermined emitter portion of the substrate, said emitter portion being spatially delimited by an elongated alignment feature extending along an alignment direction, said alignment direction being different from the slit direction in the sample image. The system then further comprises a data processing unit adapted to capture and process the slit image to detect a position of the elongated alignment feature along the slit direction.

In a preferred embodiment, the alignment feature has a continuous or interrupted extension in the alignment direction, wherein the accumulated extension of the alignment feature or its portions amounts to at least 50%, preferably 70% of the extension of the emitter portion along the alignment direction, and most preferably continuously extends along the alignment direction within the emitter portion of the substrate.

In a preferred embodiment, the alignment feature comprises a reference portion of a predetermined length in said alignment direction, to define a length scale for the sample image along the alignment direction, the length scale being smaller than the size of the emitter portion.

In a preferred embodiment, the system further comprises a nanofabrication unit for forming the elongated alignment feature on the substrate.

In a preferred embodiment, the system relates to a fabrication system for fabricating a single photon emitter device comprising a system according to the second aspect. The system then further comprises a data processing unit configured to select a single photon emitter from the ensemble of single photon emitters on the substrate, and a nanofabrication unit arranged to form an emitter selection structure for the selected single photon emitter on the substrate based on the location information and the wavelength information for the single photon emitter.

In a preferred embodiment, said emitter selection structure is a cavity matching said wavelength information associated with the selected single photon emitter.

In a preferred embodiment, the system further comprises an excitation unit arranged to excite said single photon emitters to emit a luminescence signal comprising a plurality of single photon emissions of said single photon emitters.

In a preferred embodiment, wherein the luminescence signal is a photoluminescence, cathodoluminescence or electroluminescence signal, wherein the excitation unit comprises a carrier injection device and/or an irradiation device arranged to irradiate the substrate with excitation radiation comprising photons and/or electrons for enabling excitation of multiple single photon emitters in the substrate, wherein the excitation radiation is arranged to cover at least the ensemble of single photon emitters currently projected onto the slit image.

In a preferred embodiment, the luminescence signal is a photoluminescence signal, and the excitation unit comprises an irradiation device arranged to irradiate the substrate with excitation radiation having an excitation wavelength. The excitation radiation is arranged to cover at least the ensemble of single photon emitters currently projected onto the slit image, and the excitation wavelength is smaller than the characteristic wavelength of the single photon emitters or smaller than a wavelength corresponding to a bandgap of the substrate.

In a preferred embodiment, the excitation radiation does not comprise photons having the characteristic wavelength of the single photon emitters, and the irradiation unit preferably comprises one of a wavelength-filtered radiation source, a substantially monochromatic radiation source, a solid state emitter, an LED, and a laser.

In a third aspect, the invention relates to a computer program comprising machine-readable instructions, which when executed on a processing unit implement a method according to any one of the embodiments of the first aspect, wherein implementing the method in particular comprises controlling signal collection means external to the processing unit, and/or which when executed on a processing unit control any one of the embodiments of the system according to the second aspect.

### DETAILED DESCRIPTION OF EMBODIMENTS

The features and numerous advantages of the method and system according to the present invention will best be understood from a detailed description of preferred embodiments with reference to the accompanying drawings, in which:
- Fig. 1: is a schematic illustration of a characterization system for single photon emitters according to an example;
- Fig. 2: illustrates a flow diagram for characterizing an ensemble of single photon emitters on a substrate according to an example;
- Fig. 3A: is a schematic illustration of a characterization system for single photon emitters according to an exemplary implementation;
- Fig. 3B: shows schematic illustrations of an imaged sample portion of an emitter portion on a substrate for two different configurations of a selection unit according to an example;
- Fig. 3C: illustrates a hyperspectral image composed of a plurality of hyperspectral slit images according to an example;
- Figs. 4A-4F: illustrate several examples of elongated alignment features suitable for providing a spatial reference for the single photon emitter locations in the invention;
- Fig. 5A: is an exemplary measured contour plot of a photoluminescence signal obtained from an ensemble of single photon emitters grown on a substrate;
- Fig. 5B: is a wavelength emission spectrum of a highlighted single photon emitter identified in Fig. 5A;
- Fig. 5C: is a horizontal cut along "Position X" through the center of the photoluminescence peak of the highlighted single photon emitter identified in Fig. 5A; and
- Fig. 5D: is a vertical cut along "Position Y" through the center of the photoluminescence peak of the highlighted single photon emitter identified in Fig. 5A.

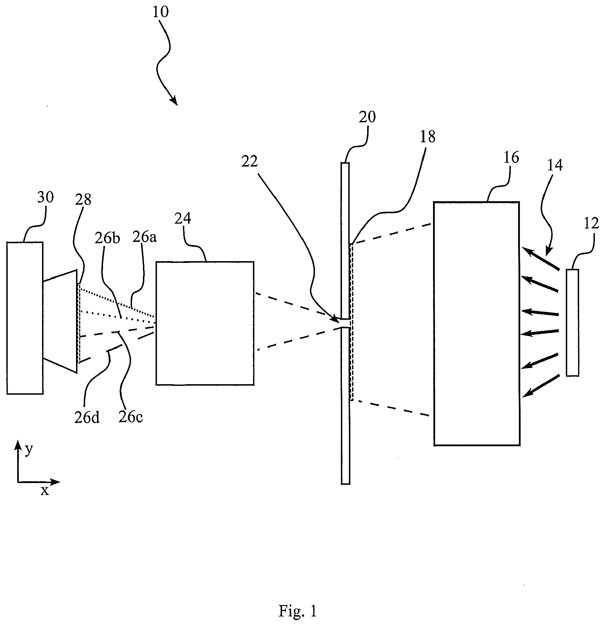

Fig. 1 shows a schematic example of a system 10 for characterizing single photon emitters on a substrate 12. A photoluminescence signal 14 originating from the single photon emitters on the substrate 12 can be collected by a collection lens assembly 16 and imaged to form a sample image 18 overlying a slit 20. The slit 20 is depicted as being oriented perpendicular to the plane of projection of Fig. 1, i.e. along the "z-direction", and selects a one-dimensional slice of the sample image 20. Said one-dimensional slice of the sample image 20 forms a slit image 22 which is projected onto a wavelength dependent beam splitter 24.

The wavelength dependent beam splitter 24 splits each light beam in the slit image 22 along the splitting direction, which in Fig. 1 is oriented along the y-direction, into a plurality of split light beams 26a-26d having different wavelengths, thereby creating a hyperspectral image 28 of the slit image 22, wherein a spectral dimension of the hyperspectral image 28 is oriented along the y-direction whereas a spatial direction corresponding to the extension of the slit 20 may be oriented perpendicular to the plane of projection of Fig. 1.

The hyperspectral image 28 can then be collected by a two-dimensional light sensor depicted as a camera having a sensor array 30, such as a CCD camera, to simultaneously obtain both wavelength and position information of the single photon emitters selected in the slit image 22.

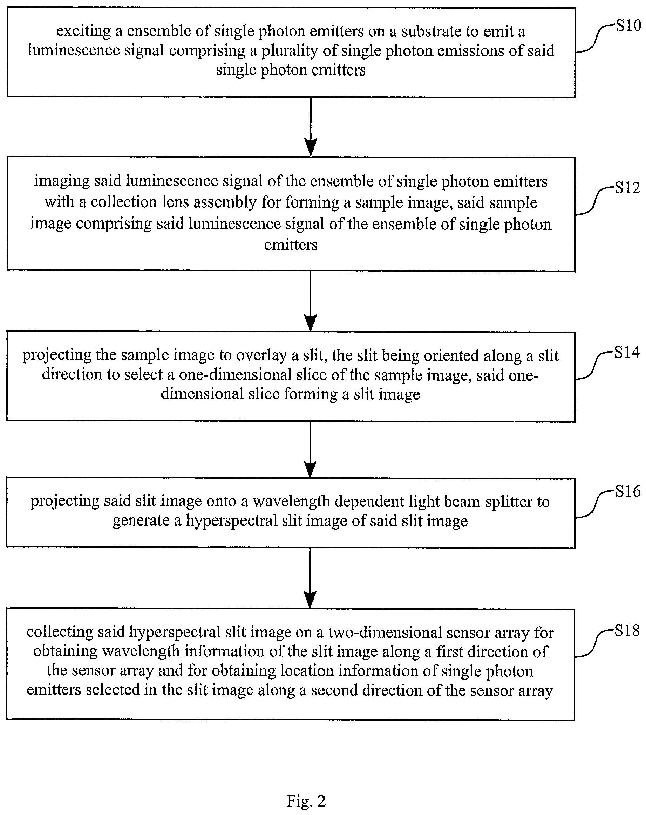

The system 10 may be used to characterize an ensemble of single photon emitters on the substrate 12 with respect to their location and to a characteristic single photon emission wavelength using the method illustrated in Fig. 2. The illustrated method comprises the steps of exciting said single photon emitters to emit a luminescence signal 14 comprising a plurality of single photon emissions of said single photon emitters (step S10) and imaging said luminescence signal 14 of the ensemble of single photon emitters with the collection lens assembly 16 for forming the sample image 18, said sample image 18 comprising said luminescence signal 14 of the ensemble of single photon emitters (step S12). The method further comprises the steps of projecting the sample image 18 to overlay a slit 20, the slit 20 being oriented along a slit direction to select a one-dimensional slice of the sample image 18, said one-dimensional slice forming the slit image 22 (step S14) and projecting said slit image 22 onto the wavelength dependent light beam splitter 24 to generate a hyperspectral slit image 28 of said slit image 22 (step S16). Finally, the method comprises the steps of collecting said hyperspectral slit image 28 on a two-dimensional sensor array 30 for obtaining wavelength information of the slit image 22 along a first direction of the sensor array 30 and for obtaining location information of single photon emitters selected in the slit image 22 along a second direction of the sensor array 30 (step S18). The second direction may correspond to the y-direction in Fig. 1.

Typically, characterization of the single photon emitters along two spatial dimensions is preferred, such that a hyperspectral image 28 of the single photon emitters on the substrate 12 preferably is a three-dimensional image having two spatial dimensions and one spectral dimension.

The method depicted in Fig. 2 generates a two-dimensional slice 28 of said three-dimensional hyperspectral image along one spatial dimension selected by the slit 20, wherein wavelength information on the luminescence signal 16 originating from the single photon emitters on the substrate 12 is encoded along the first direction, and wherein the spatial dimension selected by the slit 20 is captured along the second direction.

Information on the second spatial dimension can be obtained by varying the one-dimensional slice of the sample image 18 selected by the slit 20. For example, the slit 20 could be moved along the y-direction in Fig. 1 to select a different one-dimensional slice of the sample image 18. However, moving the slit 20 would imply modifying the optical arrangement with respect to the wavelength dependent beam splitter 24 and is therefore less preferred. Alternatively, the substrate 12 itself could be moved with respect to the slit 20. However, such a displacement of the substrate 12 usually requires nanometric precision when used for the characterization of single photon emitters, and therefore requires considerable constructional effort.

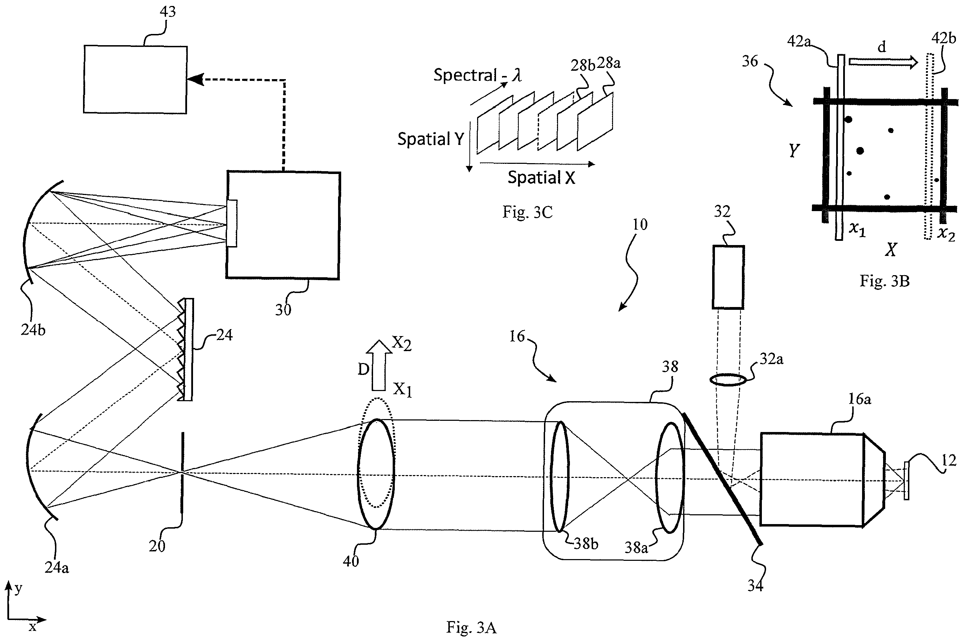

An exemplary implementation of the system 10 including a simple displacement of the sample image 18 to implement the method illustrated in Fig. 2 and to obtain a three-dimensional hyperspectral image of the single photon emitters on the substrate 12 is depicted in Fig. 3A. Fig. 3A shows a system 10 for characterizing single-photon emitters on a substrate 12. An excitation unit 32, such as a laser or an LED is used to generate excitation radiation for the ensemble of single photon emitters on the substrate 12. A combination of a focus lens 32a, a beam splitter 34 and a microscope objective 16a is used to direct the excitation radiation from the excitation unit 32 onto the investigated emitter portion 36 of the substrate 12 (a top view of an exemplary substrate along the y-direction is schematically depicted in Fig. 3B).

A photoluminescence response of the ensemble of single photon emitters on the substrate 12 is collected by the collection lens assembly 16 comprising the microscope objective 16a, the beam splitter 34, the beam expander 38 including beam expanding lenses 38a and 38b and the selection lens 40 to form the sample image 18 overlying the slit 20. The slit 20 selects the slit image 22 from the sample image 18, and the slit image 22 is projected by a first parabolic mirror 24a onto the wavelength dependent beam splitter 24 (depicted as a diffraction grating in Fig. 3A). A second parabolic mirror 24b then projects the hyperspectral slit image 28 originating from the wavelength dependent beam splitter 24 onto the sensor array 30.

The selection lens 40 is configured to be controllably displaced along a displacement direction D, for example between a first selection lens position X1 and a second selection lens position X2, the first and second selection lens positions X1, X2 being spaced by a mechanical displacement distance. Displacing the selection lens 40 along said displacement direction D can result in a virtual shift of the imaged portion of the substrate 12 and thereby results in a shift of the sample image 18 with respect to the slit 20 selecting the slit image 22.

The slit image 22 with the selection lens 40 arranged in the first selection lens position X1 corresponds to the imaged sample portion 42a depicted in Fig. 3B. When the selection lens is displaced towards the second selection lens position X2 along the displacement direction D, the slit image 22 corresponds to the imaged sample portion 42b which is displaced with respect to the imaged sample portion 42a along the sample image displacement direction d, which, depending on the employed optics, need not be equivalent to the displacement direction D of the selection lens 40. Thus, by displacing the selection lens 40 along the displacement direction D a line scan of the substrate 12 defined by the image sample portion 42a, 42b can be controllably moved across the emitter portion 36 for sequentially characterizing the ensemble of single photon emitters in substantially one-dimensional slices 42a, 42b of said emitter portion 36.

For each imaged substantially one-dimensional slice 42a, 42b of said emitter portion 36, a separate two-dimensional hyperspectral slit image 28a, 28b can be recorded by the sensor array 30 to assemble the three-dimensional hyperspectral image of the emitter portion 36 of the substrate 12 as illustrated in Fig. 3C. In the three-dimensional hyperspectral image, the orientation of the slit 20, i.e. the slit direction, can define a one-dimensional slice 42a, 42b of the emitter portion 36 along the spatial dimension Y, which is captured along the second direction of the sensor array 30. Along the first direction of the sensor array 30, spectral information of the photoluminescence signal 14 originating from the ensemble of single photon emitters on the substrate 12 can be recorded and forms the spectral dimension λ in the three-dimensional hyperspectral image. By displacing the selection lens 40 along the displacement direction D, subsequent two-dimensional hyperspectral slit images 28a, 28b can then be recorded by the sensor array 30 to assemble the three-dimensional hyperspectral image along the spatial dimension X.

For the sake of easy illustration, in the following it will be assumed that the spatial dimension X of the three-dimensional hyperspectral image corresponds to the spatial dimension X of the emitter portion 36 and the spatial dimension Y in the hyperspectral image corresponds to the spatial dimension Y in the emitter portion, and that these two directions have a perpendicular relationship, even though embodiments are not limited to this special case. Additionally, for the sake of simplicity, the spatial dimension X will be referred to as the displacement direction, while the spatial dimension Y will be referred to as slit direction. Along the slit direction (corresponding to the z-direction in Figs. 1 and 3), the photoluminescence signal 14 recorded in the hyperspectral slit image 28 can be deterministically mapped by the optics used for signal collection and projection, such that within a given hyperspectral slit image 28 positional accuracy along the slit direction should be mostly limited by the choice of the optics and the resolution of the sensor array 30. Similarly, since the wavelength dependent beam splitter 24 should provide a deterministic splitting of the wavelength of the photoluminescence signal, for each point along the substantially one-dimensional slice 42a, 42b the spectral information will be consistent for different slices 42a, 42b.

However, when selecting a different hyperspectral slit image 28a, 28b, vibrations, nonlinearities or systematic errors of the selection unit used to select a different hyperspectral slit image 28a, 28b, in this example the mechanical displacement system for displacing the selection lens 40, can induce uncertainty regarding the precise position of the substantially one-dimensional slice 42a, 42b both along the slit direction and the displacement direction D, which in turn may lead to a positional inaccuracy with respect to spatial origin of the luminescence signal originating from the single photon emitters, and can ultimately lead to a mismatch between the selection structure and the single photon emitter. This can significantly affect directivity of the single photon emission.

To account for nonlinearities of a selection unit used to select a different hyperspectral slit image 28a, 28b, a data processing unit 43 in the system 10 can correct the spatial origin of the slit image 22 based on a location of an elongated alignment feature detected in the slit image 22.

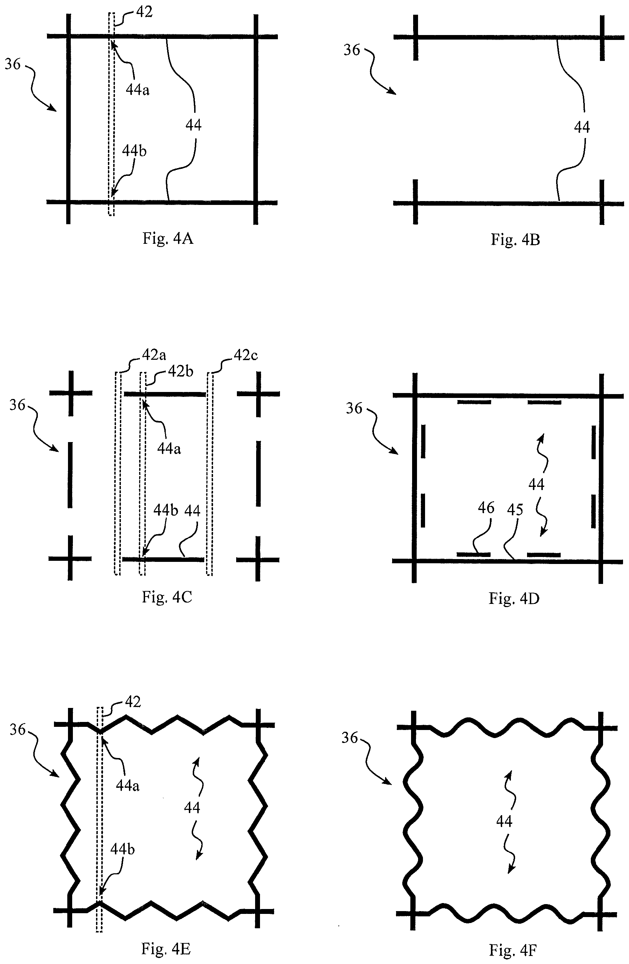

Figs. 4A-4F illustrate examples of suitable elongated alignment features 44 for providing a spatial reference for an emitter portion 36 on the substrate 12, wherein, for the sake of simplicity, the slit direction is aligned with the Y direction and the displacement direction D is aligned with the X direction.

Fig. 4A shows a first example of an elongated alignment feature 44 comprising a substantially rectangular feature having parallel lines both along the X direction and the Y direction. When capturing a slit image 22 of the emitter portion 36 on the substrate 12, a one-dimensional slice 42 of the emitter portion 36 is effectively imaged. As part of imaging said one-dimensional slice 42, the slit image 22 should also comprise a signal originating from a first alignment feature portion 44a and a second alignment feature portion 44b of the elongated alignment feature 44, each (and in combination) providing a spatial reference for emitter portion 36. Thus, by determining the location of the visible alignment feature portions 44a, 44b in the slit image 22, a spatial reference for a luminescence signal 14 of single photon emitters on the substrate 12 can be provided, and hence different selected one-dimensional slices 42 of the emitter portion 36 can be aligned with each other and/or scaled based on the detected positions of the first and second alignment feature portions 44a, 44b in a plurality or in each of the one-dimensional slices 42.

Fig. 4B shows another example of an elongated alignment feature 44 comprising parallel alignment lines for providing a spatial reference along the slit direction, but without delimiting the emitter portion 36 along both of the X and Y directions. Thus, detecting the alignment feature 44 of Fig. 4B allows correcting the spatial origin of the luminescence signal 14 along the slit direction.

Fig. 4C illustrates an emitter portion 36 comprising an alignment feature 44 with interrupted alignment portions to also provide a spatial reference along the X direction. In the illustrated example, in a first one-dimensional slice 42a, no delimiting alignment feature portions 44a and 44b can be detected in the slit image 22. In a second one-dimensional slice 42b, two delimiting alignment feature portions 44a, 44b can be detected, thereby providing a spatial reference for the luminescence signal 14 originating from the single photon emitters on the substrate 12. In the third one-dimensional slice 42c, the delimiting alignment feature portions 44a, 44b are no longer visible in the slit image 22. Thus, by comparing the intended displacement distance of the selection unit between the first one-dimensional slice 42a and the third one-dimensional slice 42c with the determined positions associated with visible alignment feature portions 44a, 44b along the displacement direction D, a displacement distance in the emitter portion 36 on the substrate 12 can be corrected based on a predetermined extension of the interrupted alignment feature 44 along the displacement direction D.

Fig. 4D combines elements of the alignment feature 44 from Fig. 4A and Fig. 4C. The alignment feature 44 exhibits a substantially rectangular shape delimited by continuous alignment portions 45. In addition, the alignment feature 44 exhibits reference portions 46 similar to the interrupted alignment feature illustrated in Fig. 4C. The continuous alignment features 45 can be visible throughout the sample image, such that for each one-dimensional slice 42 of the emitter portion 36, delimiting alignment features portions 44a, 44b can be detected to therefrom determine a spatial reference along the slit direction. Additionally, the reference feature portions 46 can be used to provide spatial reference information along the displacement direction D. Thus, the combination of alignment feature 44 according to Fig. 4D can provide improved options for correction of the spatial location of the origin of the luminescence signal 14 originating from the single photon emitters on the substrate 12, thereby improving positioning of emitter selection structures.

Figs. 4E and 4F illustrate additional alignment features 44 comprising both continuous alignment features 45 and reference portions 46 as part of the alignment feature 44. Specifically, the alignment features 44 in Figs. 4E and 4F comprise alignment portions having saw tooth and wave-like portions, respectively, to therefrom determine both spatial reference information along the slit direction and the displacement direction D. Preferably, and as shown in Figs. 4E and 4F, the alignment feature 44 is arranged such that a distance between detected alignment portions 44a, 44b of the alignment feature 44 detected within a one-dimensional slice 42 varies as a function of the displacement distance. Thus, for each one-dimensional slice 42 of the emitter portion 36, the spatial position both along the slit direction and the displacement direction D can be corrected.

As the spatial reference along the displacement direction D in the examples of the alignment features illustrated in Figs. 4D-4F is not simply equivalent to a size of the emitter portion, systematic or a nonlinear errors in the displacement of the one-dimensional slice 42 within the emitter portion 36 can be corrected.

The alignment features 44 illustrated in Figs. 4D-4F only illustrate exemplary embodiments, and a plurality of alignment features 44 may be used to implement spatial reference information both along the slit direction and along the displacement direction D. For example, the alignment feature 44 may be skewed or curved to thereby induce a varying distance between the detected at least two delimiting alignment portions 44a, 44b in two sequentially captured one-dimensional slices 42.

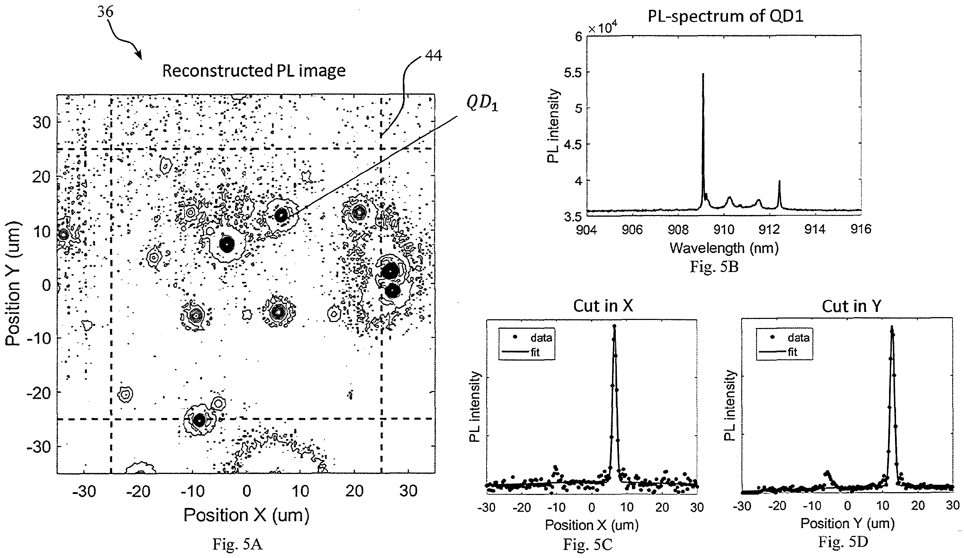

Figs. 5A-5D illustrate an example of a measured hyperspectral image of an ensemble of single photon emitters on a substrate 12 exhibiting an alignment feature 44 similar to the alignment feature illustrated in Fig. 4A. The investigated single photon emitters relate to molecular beam epitaxy quantum dots grown in a Stranski-Krastanov growth mode. The single photon emitters are excited with a spread laser spot covering the emitter portion 36 and the hyperspectral image 28 is acquired using a system 10 similar to the one illustrated in Fig. 3.

Fig. 5A depicts a contour plot of the measured photoluminescence intensity of the single photon emitters in the emitter portion 36 along the "X Position" and the "Y Position" of the substrate 12 and within a given frequency band associated with the characteristic emission wavelength of the quantum dots grown on the substrate 12. The alignment feature 44 is illustrated with dashed lines. Single photon emitters, such as the highlighted quantum dot QD₁ can be identified as circular spots of high photoluminescence intensity within the three-dimensional hyperspectral image.

Fig. 5B illustrates the photoluminescence spectrum in the center of the circular photoluminescence peak in Fig. 5A associated with highlighted quantum dot QD₁. Figs. 5C and 5D show one-dimensional slices along the "X Position" and the "Y Position" through the reconstructed photoluminescence image, i.e. the three-dimensional hyperspectral image, the slice going through the circular luminescence peak associated with the quantum dot QD₁.

As can be seen from Fig. 5B, the single photon emission of the quantum dot QD₁ can be associated with a narrow photoluminescence frequency band indicating the characteristic emission frequency of the quantum dot QD₁. The position of the quantum dot QD₁ is determined from the spatial information measured along "Position X" and "Position Y" by fitting the data points and determining the center position of the photoluminescence intensity peak. A fitting error of the fit using the exemplary measurement system for acquiring data points can then be as low as 30 nm, such that the position of the quantum dot QD₁ can be determined with an accuracy below 30 nm.

Based on the determined position of the quantum dot QD₁, a cavity can be fabricated on top of the determined position of the quantum dot QD₁ as an emitter selection structure, and a resonance frequency of the cavity can be adapted to the determined characteristic single photon emission wavelength. Thus, a single photon emitter device with high extraction efficiency for single photons can be fabricated based on the characterization of the ensemble of single photon emitters on the substrate 12.

The description of the preferred embodiments and the Figures merely serve to illustrate the invention and the beneficial effects associated therewith, but should not be understood to imply any limitation. The scope of the invention is to be determined solely by the appended claims.

### LIST OF REFERENCE SIGNS

- 10: system
- 12: substrate
- 14: luminescence signal
- 16: collection lens assembly
- 16a: microscope objective
- 18: sample image
- 20: slit
- 22: slit image
- 24: wavelength dependent beam splitter
- 26a-d: split light beams
- 28: hyperspectral slit image
- 30: sensor array
- 32: excitation unit
- 32a: focus lens of the excitation unit
- 34: beam splitter
- 36: emitter portion
- 38: beam expander
- 38a, b: beam expanding lenses
- 40: selection lens
- 42: one-dimensional slice of the emitter portion on the substrate
- 42a: first one-dimensional slice
- 42b: second one-dimensional slice
- 42c: third one-dimensional slice
- 43: data processing unit
- 44: alignment feature
- 45: continuous alignment portion
- 46: reference portion
- D: mechanical displacement direction in the optical assembly
- d: virtual displacement direction on the substrate
- QD₁: single photon emitter

## Claims

1. A method for characterizing an ensemble of single photon emitters on a substrate (12) with respect to their location and a characteristic single photon emission wavelength, the method comprising the steps of:
- exciting said single photon emitters to emit a luminescence signal (14) comprising a plurality of single photon emissions of said single photon emitters;
- imaging said luminescence signal (14) of the ensemble of single photon emitters with a collection lens assembly (16) for forming a sample image (18), said sample image (18) comprising said luminescence signal (14) of the ensemble of single photon emitters;
- projecting the sample image (18) to overlay a slit (20), the slit (20) being oriented along a slit direction to select a one-dimensional slice of the sample image (18), said one-dimensional slice forming a slit image (22);
- projecting said slit image (22) onto a wavelength dependent light beam splitter (24) to generate a hyperspectral slit image (28) of said slit image (22);
- collecting said hyperspectral slit image (28) on a two-dimensional sensor array (30) for obtaining wavelength information of the slit image (22) along a first direction of the sensor array (30) and for obtaining location information of single photon emitters selected in the slit image (22) along a second direction of the sensor array (30).

2. The method of claim 1, wherein the luminescence signal (14) is a photoluminescence, cathodoluminescence or electroluminescence signal (14), wherein exciting said single photon emitters comprises exciting the substrate (12) with photon radiation and/or electron radiation and/or injected carriers enabling excitation of multiple single photon emitters on the substrate (12) wherein said excitation at each instance covers at least the ensemble of single photon emitters currently projected onto the slit image (22),
wherein said excitation is preferably provided by one or more of a wavelength-filtered radiation source, a substantially monochromatic radiation source, a solid state emitter, an LED, a laser, an electron emitter, and a carrier injection unit for injecting electrical carriers into the substrate (12), wherein the excitation most preferably comprises large area irradiation with photons and most preferably does not comprise photons having the characteristic wavelength of the single photon emitters.

3. The method of any one of the preceding claims, the method further comprising a step of displacing the sample image (18) along a displacement direction (D) with respect to the slit (20), wherein the displacement direction (D) is different from the slit direction, wherein the step of displacing the sample image (18) along the displacement direction (D) with respect to the slit (20) preferably comprises mechanically displacing an optical element in an imaging light path between the sensor array (30) and the collection lens assembly (16) over a first distance, such that the sample image (18) overlying the slit (20) is translated with respect to the slit (20) over a second distance, said second distance corresponding to a virtual displacement distance of the imaged luminescence signal (14) on the substrate (12) that is smaller than the first distance, wherein a ratio between the first distance and the virtual displacement distance is in particular larger than 10, preferably larger than 20, most preferably larger than 30 and preferably smaller than 60, more preferably smaller than 50.

4. The method of claim 3, wherein a selection lens (40) is preferably arranged in an imaging light path between the substrate (12) and the slit (20), and wherein the method comprises a step of displacing the selection lens (40) along the displacement direction (D),
wherein the collection lens assembly (16) preferably comprises a collection lens, in particular a microscope objective, which has a focal length which is smaller than a focal length of the selection lens (40), such that a translation of the selection lens (40) along the displacement direction (D) by a first distance corresponds to a virtual displacement of the imaged luminescence signal (14) on the substrate (12) by a virtual displacement distance that is smaller than the first distance.

5. The method of any one of the preceding claims, wherein the single photon emitter characterization is carried out in a predetermined emitter portion (36) of the substrate (12), said emitter portion (36) being spatially delimited by an elongated alignment feature (44) extending along an alignment direction, said alignment direction being different from the slit direction in the sample image (18), and wherein the method further comprises a step of detecting the elongated alignment feature (44) in the slit image (22), wherein the method preferably further comprises a step of arranging the elongated alignment feature (44) on the substrate (12), and/or
wherein the alignment feature (44) has a continuous or interrupted extension in the alignment direction, wherein the accumulated extension of the alignment feature (44) or its portions amounts to at least 50%, preferably 70% of the extension of the emitter portion (36) along the alignment direction, most preferably continuously extends along the alignment direction within the emitter portion (36) of the substrate (12), and/or
wherein the alignment feature (44) comprises a reference portion (46) of a predetermined length in said alignment direction, to define a length scale for the sample image (18) along the alignment direction, the length scale being smaller than the size of the emitter portion (36).

6. A method for fabricating a single photon emission device, the method comprising a step of characterizing an ensemble of single photon emitters on a substrate (12) with respect to their location and a characteristic single photon emission wavelength according to a method of any one of the preceding claims, the method further comprising:
- selecting a single photon emitter (QD1) from the ensemble of single photon emitters on the substrate (12),
forming an emitter selection structure on the substrate (12) for the selected single photon emitter (QD1) based on the location information and the wavelength information for the single photon emitter (QD1),
wherein said emitter selection structure is preferably a cavity matching said wavelength information associated with the selected single photon emitter (QD1).

7. The method of claim 6, the method further comprising
- providing an ensemble of single photon emitters on the substrate (12), in particular by performing an implantation process or a crystal growth process for forming the single photon emitters on the substrate (12).

8. A system (10) for characterizing an ensemble of single photon emitters on a substrate (12) with respect to their location and a characteristic single photon emission wavelength, the system (10) comprising:
- a collection lens assembly (16) adapted to collect a luminescence signal (14) of the ensemble of single photon emitters at the transition wavelength and to create a sample image (18) of the luminescence signal (14) of the single photon emitters on the substrate (12);
- a slit (20) arranged in an image plane of the collection lens assembly (16), the image plane comprising the sample image (18), the slit (20) being oriented along a slit direction to select a one-dimensional slice of the sample image (18), said one-dimensional slice forming a slit image (22);
- a wavelength dependent light beam splitter (24) arranged to receive said slit image (22) and to generate a hyperspectral slit image (28) of said slit image (22);
- a two-dimensional sensor array (30) arranged to collect said hyperspectral slit image (28) for obtaining wavelength information of the slit image (22) along a first direction of the sensor array (30) and for obtaining location information of single photon emitters selected in the slit image (22) along a second direction of the sensor array (30).

9. The system (10) of claim 8, further comprising a selection unit, wherein the selection unit is arranged to displace the sample image (18) overlying the slit (20) along a displacement direction (D) with respect to the slit (20), wherein the displacement direction (D) is different from the slit direction,
wherein the selection unit is preferably arranged to mechanically displace an optical element in an imaging light path between the sensor array (30) and the collection lens assembly (16) over a first distance, such that the sample image (18) overlying the slit (20) is translated with respect to the slit (20) over a second distance, said second distance corresponding to a virtual displacement of the imaged luminescence signal (14) on the substrate (12) that is smaller than the first distance, wherein a ratio between the first distance and the virtual displacement distance is in particular larger than 10, preferably larger than 20, most preferably larger than 30 and preferably smaller than 60, more preferably smaller than 50.

10. The system (10) of claim 9, wherein the selection unit comprises a selection lens (40) arranged to be displaceable along the displacement direction (D), the selection lens (40) being arranged in an imaging light path between the substrate (12) and the slit (20),
wherein the collection lens assembly (16) preferably comprises a collection lens, in particular a microscope objective, which has a focal length which is smaller than a focal length of the selection lens (40), such that a translation of the selection lens (40) along the displacement direction (D) by a first distance corresponds to a virtual displacement of the imaged luminescence signal (14) on the substrate (12) by a virtual displacement distance that is smaller than the first distance.

11. The system (10) of any one of claims 8 to 10, wherein the system (10) is configured for characterizing said single photon emitters in a predetermined emitter portion (36) of the substrate (12), said emitter portion (36) being spatially delimited by an elongated alignment feature (44) extending along an alignment direction, said alignment direction being different from the slit direction in the sample image (18), and wherein the system (10) further comprises:
- a processing unit (43) adapted to capture and process the slit image (22) to detect a position of the elongated alignment feature (44) along the slit direction,
wherein the alignment feature (44) preferably has a continuous or interrupted extension in the alignment direction, wherein the accumulated extension of the alignment feature (44) or its portions amounts to at least 50%, preferably 70% of the extension of the emitter portion (36) along the alignment direction, most preferably continuously extends along the alignment direction within the emitter portion (36) of the substrate (12), and/or
wherein the alignment feature (44) preferably comprises a reference portion (46) of a predetermined length in said alignment direction, to define a length scale for the sample image (18) along the alignment direction, the length scale being smaller than the size of the emitter portion (36).

12. The system (10) according to any one of claims 8 to 11, further comprising a nanofabrication unit for forming the elongated alignment feature (44) on the substrate (12).

13. A fabrication system (10) for fabricating a single photon emitter device comprising a system (10) according to any one of claims 8 to 12, wherein the system (10) comprises:
- a processing unit (43) configured to select a single photon emitter (QD1) from the ensemble of single photon emitters on the substrate (12), and
- a nanofabrication unit arranged to form an emitter selection structure for the selected single photon emitter (QD1) on the substrate (12) based on the location information and the wavelength information for the single photon emitter (QD1), wherein said emitter selection structure is preferably a cavity matching said wavelength information associated with the selected single photon emitter (QD1).

14. The system (10) of any one of claims 8 to 13, the system (10) further comprising:
- an excitation unit (32) arranged to excite said single photon emitters to emit a luminescence signal (14) comprising a plurality of single photon emissions of said single photon emitters,
wherein the luminescence signal (14) is preferably a photoluminescence, cathodoluminescence or electroluminescence signal (14), and wherein the excitation unit (32) comprises a carrier injection device and/or an irradiation device arranged to irradiate the substrate (12) with excitation radiation comprising photons and/or electrons for enabling excitation of multiple single photon emitters on the substrate (12), wherein the excitation radiation is arranged to cover at least the ensemble of single photon emitters currently projected onto the slit image (22), wherein the excitation radiation preferably does not comprise photons having the characteristic wavelength of the single photon emitters, and wherein the irradiation unit preferably comprises one of a wavelength-filtered radiation source, a substantially monochromatic radiation source, a solid state emitter, an LED, and a laser.

15. A computer program comprising machine-readable instructions, which when executed on a processing unit implement a method according to any one of claims 1-7, wherein implementing the method in particular comprises controlling signal collection means external to the processing unit, and/or which when executed on a processing unit control any one of the systems (10) according to claims 8 to 14.
